# EUROPÄISCHE PATENTSCHRIFT

(11) **EP 0 566 833 B1**
(45) Veröffentlichungstag und Bekanntmachung des Hinweises auf die Patenterteilung: **21.05.1997**
(21) Anmeldenummer: 93102099.4
(22) Anmeldetag: 11.02.1993
(51) Int. Cl.: A45D 20/30, G05D 23/27

(54) **Handluftdusche**
Hand-operated air blower
Douche à air portatif

(30) Priorität: 24.04.1992 DE 9205576 U
(43) Veröffentlichungstag der Anmeldung: 27.10.1993
(73) Patentinhaber: Wella Aktiengesellschaft, 64295 Darmstadt (DE)
(72) Erfinder: Schweickert, Rainer, W-6103 Griesheim (DE)

(56) Entgegenhaltungen:
- EP-A- 0 176 003
- EP-A- 0 242 777
- DE-A- 3 139 199
- GB-A- 2 057 858
- GB-A- 2 093 343

## Beschreibung

Die Erfindung betrifft eine Handluftdusche nach dem Oberbegriff des Anspruchs 1.

Gattungsgleiche Handluftduschen mit einem Kaltluftstromschalter sind in einer Vielzahl bekannt, so zum Beispiel aus der EP-A-0 242 777. Der Kaltluftstromschalter wird dafür eingesetzt, um von einem heißen Luftstrom auf einen kalten Luftstrom umschalten zu können, wodurch eine eingelegte und mit einem heißen Luftstrom behandelte Haarlocke durch den kalten Luftstrom an die Raumlufttemperatur konditioniert werden kann und eine höhere Haltbarkeit einer Haarlocke erreicht wird. Von Nachteil hierbei ist, daß nur durch Erfahrungswerte die erforderliche Zeit zum Abkühlen und Stabilisieren einer Locke vorgegeben werden kann. Sollen mehrere gleichartige Locken behandelt werden, so kann aus mangelndem Zeitgefühl die Kaltlufttaste unterschiedlich lange bedient werden oder bei hohem Arbeitsanfall gar nicht oder häufig zu kurz. Die Folge ist dann häufig eine nachteilige Auswirkung auf die Stabilität der einzelnen Locke, wodurch sich wiederum Nachteile für die Frisurengestaltung an sich sowie deren Haltbarkeitsdauer, auch partiell, ergeben (Haltbarkeitssteuerung). Von Nachteil ist, daß während der Kaltluftstrombehandlung die Taste solange gedrückt sein muß; häufig noch mit einer ungünstigen Fingerhaltung verbunden.

Aufgabe der Erfindung ist es daher, während der Kaltluftstromhaarbehandlung nicht dauernd auf die Kaltluftstromtaste drücken zu müssen.

Gelöst wird diese Aufgabe nach dem kennzeichnenden Teil des Anspruchs 1. Weitere vorteilhafte Weiterbildungen der Erfindung gehen aus den Unteransprüchen hervor.

Dadurch, daß dem Kaltluftstromschalter eine zeitverzögerte Rückstelleinrichtung zugeordnet ist, läßt sich lediglich durch Antippen auf den Kaltluftstromschalter eine Kaltluftstrombehandlung einleiten, die mit einer vorgegebenen Zeitverzögerung wieder automatisch auf eine Warmluftstrombehandlung umschaltet (Anspruch 1).

Eine individuell auf die Haarlocke abgestimmte Kaltluftstrombehandlung kann vorteilhafterweise manuell mit einer Zeitvorgabeeinrichtung versehen werden oder durch eine Automatik, derart, daß der Rückstelleinrichtung ein temperaturabhängiges, über einen Temperatursensor gesteuertes Zeitglied zugeordnet ist, wobei als Temperatursensor ein Infrarotlicht erfassender Sensor vorgesehen ist. Dieser Temperatursensor ist derart angeordnet, daß die berührungslose Temperaturerfassung einer Haarlocke ungestört erfolgen kann.

Die Erfindung wird anhand von zwei Ausführungsbeispielen näher beschrieben. Es zeigt:
- Fig. 1: ein Blockschaltbild eines ersten Ausführungsbeispiels;
- Fig. 2: einen vereinfachten Schaltplan des Ausführungsbeispiels nach der Fig. 1;
- Fig. 3: ein Blockschaltbild eines zweiten Ausführungsbeispiels;
- Fig. 4: eine Seitenansicht auf eine Handluftdusche mit verschiedenen Bedienelementen und Signaleinrichtungen.

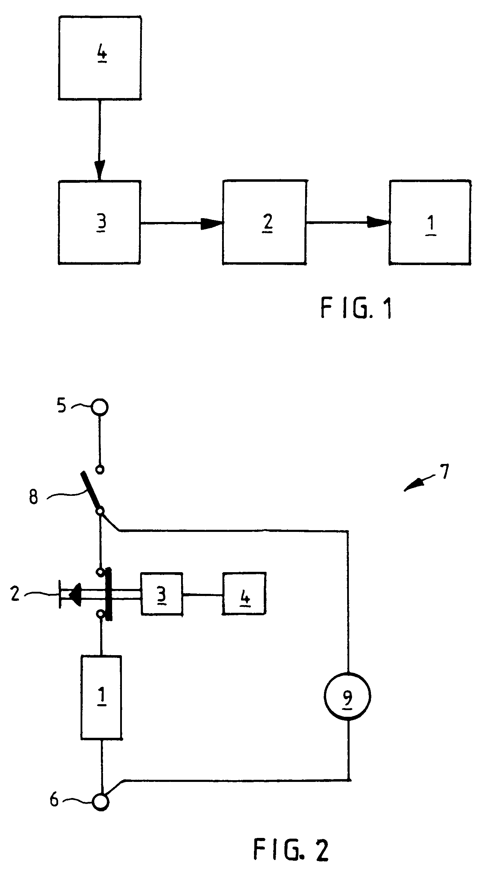

Ein erstes Ausführungsbeispiel der Erfindung ist anhand eines Blockschaltbilds in der Fig. 1 dargestellt, wobei einer Heizeinrichtung 1 ein Kaltlufttastschalter 2 zugeordnet ist, der mit einer Rückstelleinrichtung 3 kommuniziert. Für eine Zeitverzögerung der Rückstelleinrichtung 3 ist eine Zeitvorgabeeinrichtung 4 vorgesehen, mit der eine individuelle Kaltluftstrombehandlungszeit vorgegeben werden kann. Die Zeitvorgabe der Zeitvorgabeeinrichtung 4 kann nach verschiedenen Prinzipien realisiert sein, zum Beispiel nach einem thermischen (Bi-Metall), elektrischen, elektronischen, mechanischen oder pneumatischen Prinzip.

Aus der Fig. 2 geht die Funktion nach dem Blockschaltbild in der Fig. 1 näher hervor. An den Anschlußpunkten 5 und 6 liegt zum Betrieb einer Handluftdusche 7 eine Netzspannung an, die über einen Netzschalter 8 ein Gebläse 9 und die Heizeinrichtung 1 mit Energie versorgt, wobei die Heizeinrichtung 1 mit dem Kaltlufttastschalter 2 verbunden ist. Durch Betätigung des Netzschalters 8 wird mittels des Gebläses 9 und der Heizeinrichtung 1 ein Heißluftstrom erzeugt, der durch ein an sich bekanntes Heizregister in der Temperatur eingestellt werden kann. Zur Einleitung einer Kaltluftbehandlung wird der Kaltlufttastschalter 2 kurz angetippt, wobei die Rückstelleinrichtung 3 den Schalter 2 solange in einer offenen Schaltstellung hält, bis die Zeitvorgabeeinrichtung 4 nach Ablauf einer vorgegebenen Zeit über die Rückstelleinrichtung 3 den Schalter 2 wieder schließt.

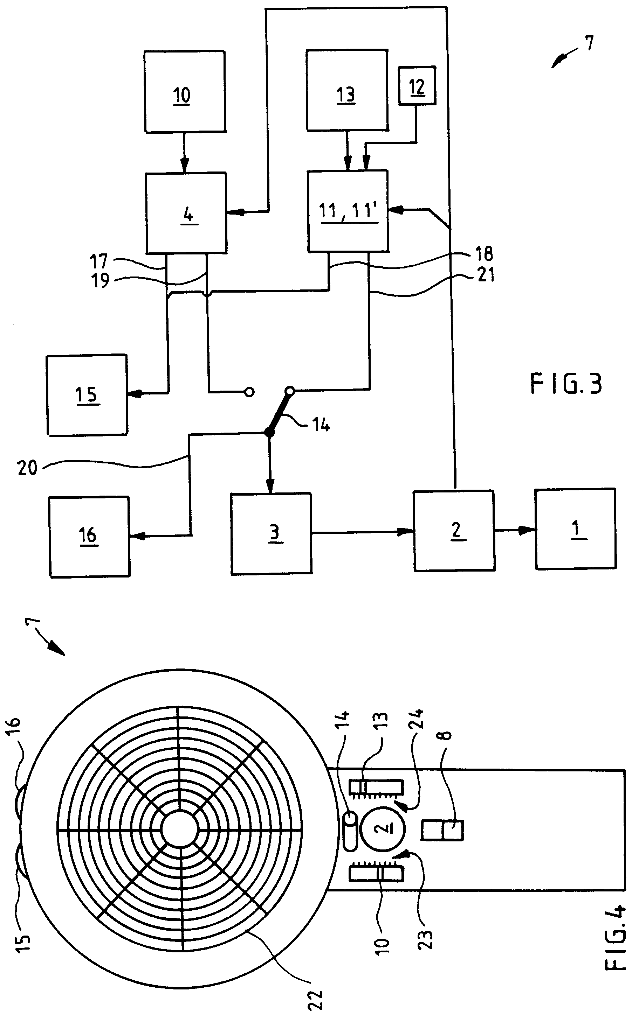

In der Fig. 3 ist in einem zweiten Ausführungsbeispiel ein Blockschaltbild dargestellt, bei dem wahlweise eine Kaltluftstrombehandlung durch eine Zeitvorgabewahleinrichtung 10 oder automatisch durch ein temperaturabhängiges Zeitglied 11 bzw. Komparator 11' erfolgen kann. Eine Temperatur einer zu behandelnden Haarlocke wird von einem Temperatursensor 12 erfaßt und im temperaturabhängigen Zeitglied 11 bzw. Komparator 11' entsprechend verarbeitet und ein Rückstellsignal auf die Rückstelleinrichtung 3 gegeben, wenn ein vorgegebener Temperaturwert einer Temperaturvorgabewahleinrichtung 13 übereinstimmt mit einem gemessenem Temperaturwert. Für einen wahlweisen Betrieb eines Zeit-oder Automatikprogramms ist ein Umschalter 14 vorgesehen. Zum Signalisieren eines bevorstehenden Kaltluftstrombehandlungsendes ist eine Vorsignaleinrichtung 15 vorgesehen, die entweder von der Zeitvorgabeeinrichtung 4 oder dem temperaturabhängigen Zeitglied 11 bzw. Komparator 11' angesteuert wird. Ein Signal für die Vorsignaleinrichtung 15 wird vor Zeitablauf der vorgegebenen Zeit der Zeitvorgabeeinrichtung 4 über eine Leitung 17 an die Vorsignaleinrichtung 15 gegeben. Bei Automatikbetrieb wird ein Signal für die Vorsignaleinrichtung 15 von dem Komparator 11' bzw. temperaturabhängigen Zeitglied 11 über eine Leitung 18 übertragen. Beim Automatikprogramm wird das Vorsignal dadurch gebildet, daß bei Erreichen eines vorgegebenen Differenzwerts von Soll-und Isttemperatur das Vorsignal gebildet wird und über eine Leitung 18 zur Vorsignaleinrichtung 15 geleitet wird und dort ein akustisches oder/und optisches Vorsignal verursacht. Bei Erreichen eines Behandlungsendes im Zeitprogramm wird ein entsprechendes Signal von einer Leitung 19 über den Umschalter 14 und einer Leitung 20 auf die Signaleinrichtung 16 geleitet. Parallel dazu bekommt die Rückstelleinrichtung 3 ein entsprechendes Rückstellsignal. Beim Automatikbetrieb wird bei Erreichen eines vorbestimmten Temperaturdifferenzwerts zwischen Soll- und Isttemperatur vom Komparator 11' über die Leitung 21 und dem Umschalter 14 und über die Leitung 20 ein Behandlungsendesignal auf die Signaleinrichtung 16 gegeben. Parallel dazu verläuft ein entsprechendes Rückstellsignal auf die Rückstelleinrichtung 3. Der Temperatursensor 12 ist als Infrarotlichtsensor ausgebildet für eine berührungslose Temperaturmessung einer Haarlocke und derart in oder an der Handluftdusche 7 angeordnet, daß keine Fremdbeeinflussung erfolgen kann. Eine derartige Temperaturerfassungseinrichtung ist zum Beispiel in der US-A-44 24 437 offenbart.

In der Fig. 4 ist in einer Seitenansicht die Handluftdusche 7 dargestellt mit Blick auf eine Luftansaugöffnung 22 und den Bedienelementen, nämlich dem Netzschalter 8, dem Umschalter 14, der Zeitvorgabewahleinrichtung 10, der Temperaturvorgabewahleinrichtung 13 und dem Kaltlufttastschalter 2, die hier lediglich als Anordnungsbeispiel zu sehen sind. Die Zeitvorgabewahleinrichtung 10 und die Temperaturvorgabewahleinrichtung 13 weisen zur Vorgabe eines bestimmten Werts eine entsprechende Skala 23, 24 auf.

Ein entsprechendes Differenzwertermittlungverfahren zur Erzeugung eines Steuersignals ist zum Beispiel aus der EP-A-0 176 003 bekannt und gilt hiermit als offenbart.

### Bezugszeichenliste

- 1: Heizeinrichtung
- 2: Kaltlufttastschalter
- 3: Rückstelleinrichtung
- 4: Zeitvorgabeeinrichtung
- 5, 6: Netzspannung
- 7: Handluftpumpe
- 8: Netzschalter
- 9: Gebläse
- 10: Zeitvorgabewahleinrichtung
- 11: Temperaturabhängiges Zeitglied
- 11': Komparator
- 12: Temperatursensor
- 13: Temperaturvorgabewahleinrichtung
- 14: Umschalter
- 15: Vorsignaleinrichtung
- 16: Signaleinrichtung
- 17: Leitung
- 18: Leitung
- 19: Leitung
- 20: Leitung
- 21: Leitung
- 22: Lufteinsaugöffnung
- 23, 24: Skala

## Patentansprüche

1. Handluftdusche für eine Haarbehandlung mit einem Gebläse, einer Heizeinrichtung und einem Kaltlufttastschalter zwecks Stabilisierung einer zuvor mit einem Heißluftstrom behandelten Locke mittels eines Kaltluftstroms, **dadurch gekennzeichnet,** daß dem Kaltlufttastschalter (2) eine zeitverzögerte Rückstelleinrichtung (3) zugeordnet ist.

2. Handluftdusche nach Anspruch 1, **dadurch gekennzeichnet,** daß die Rückstelleinrichtung (3) mit einer Zeitvorgabeeinrichtung (4) versehen ist.

3. Handluftdusche nach Anspruch 2, **dadurch gekennzeichnet,** daß der Zeitvorgabeeinrichtung (4) eine Zeitvorgabewahleinrichtung (10) zugeordnet ist.

4. Handluftdusche nach Anspruch 3, **dadurch gekennzeichnet,** daß die Zeitvorgabewahleinrichtung (10) mit einem Wahlschalter versehen ist.

5. Handluftdusche nach Anspruch 3, **dadurch gekennzeichnet,** daß die Zeitvorgabewahleinrichtung (10) mit einem Dreh- oder Schiebestellorgan versehen ist.

6. Handluftdusche nach mindestens Anspruch 1, **dadurch gekennzeichnet,** daß der Rückstelleinrichtung (3) eine optische oder/und akustische Signaleinrichtung (16) zugeordnet ist.

7. Handluftdusche nach mindestens Anspruch 1, **dadurch gekennzeichnet,** daß der Rückstelleinrichtung (3) eine optische oder/und akustische Vorsignaleinrichtung (15) zugeordnet ist.

8. Handluftdusche nach mindestens Anspruch 1, **dadurch gekennzeichnet,** daß der Rückstelleinrichtung (3) ein temperaturabhängiges, über einen Temperatursensor (12) gesteuertes Zeitglied (11) zugeordnet ist.

9. Handluftdusche nach Anspruch 8, **dadurch gekennzeichnet,** daß dem temperaturabhängigen Zeitglied (11) eine Temperaturvorgabewahleinrichtung (13) zugeordnet ist.

10. Handluftdusche nach Anspruch 8, **dadurch gekennzeichnet,** daß als temperaturabhängiges Zeitglied (11) ein Temperaturdifferenzen erfassender Komparator (11') vorgesehen ist.

## Claims

1. A hand air blower for treating hair, having a fan, a heating device and a cold air push-button for stabilising with a cold air stream a lock of hair already treated with a hot air stream, characterised in that a time-delayed restoring device (3) is associated with the cold air push-button (2).

2. A hand air blower in accordance with Claim 1, characterised in that the restoring device (3) is provided with a specified-time device (4).

3. A hand air blower in accordance with Claim 2, characterised in that a specified-time selecting device (10) is associated with the specified-time device (4).

4. A hand air blower in accordance with Claim 3, characterised in that the specified-time selecting device (10) is provided with a selector switch.

5. A hand air blower in accordance with Claim 3, characterised in that the specified-time selecting device (10) is provided with a rotary or sliding adjusting member.

6. A hand air blower in accordance with at least Claim 1, characterised in that a visual and/or acoustic signalling device (16) is associated with the restoring device (3).

7. A hand air blower in accordance with at least Claim 1, characterised in that a visual and/or acoustic warning signalling device (15) is associated with the restoring device (3).

8. A hand air blower in accordance with at least Claim 1, characterised in that a temperature-dependent timing element (11) controlled via a temperature sensor (12) is associated with the restoring device (3).

9. A hand air blower in accordance with Claim 8, characterised in that a specified-temperature selecting device (13) is associated with the temperature-dependent timing element (11).

10. A hand air blower in accordance with Claim 8, characterised in that a comparator (11') determining temperature differences is provided as a temperature-dependent timing element (11).

## Revendications

1. Séchoir à main pour effectuer un traitement sur des cheveux, pourvu d'une soufflerie, d'un dispositif de chauffage et d'un interrupteur à effleurement pour air froid, à des fins de stabilisation au moyen d'un courant d'air froid d'une boucle précédemment traitée avec un courant d'air chaud, caractérisé en ce qu'un dispositif de rappel (3) à retardement est associé à l'interrupteur à effleurement pour air froid (2).

2. Séchoir à main selon la revendication 1, caractérisé en ce que le dispositif de rappel (3) est pourvu d'un dispositif de prédétermination du temps (4).

3. Séchoir à main selon la revendication 2, caractérisé en ce qu'au dispositif de prédétermination du temps (4) est associé un dispositif de choix du temps prédéterminé (10).

4. Séchoir à main selon la revendication 3, caractérisé en ce que le dispositif de choix du temps prédéterminé (10) est pourvu d'un interrupteur de sélection.

5. Séchoir à main selon la revendication 3, caractérisé en ce que le dispositif de choix du temps prédéterminé (10) est pourvu d'un organe de réglage rotatif ou à poussoir.

6. Séchoir à main selon la revendication 1, caractérisé en ce qu'au dispositif de rappel (3) est associé un dispositif à signal optique ou/et acoustique (16).

7. Séchoir à main selon la revendication 1, caractérisé en ce qu'au dispositif de rappel (3) est associé un dispositif d'avertissement (15) optique ou/et acoustique.

8. Séchoir à main selon la revendication 1, caractérisé en ce qu'au dispositif de rappel (3) est associé un organe minuteur (11) dépendant de la température et commandé par l'intermédiaire d'un capteur de température (12).

9. Séchoir à main selon la revendication 8, caractérisé en ce qu'a l'organe minuteur (11) dépendant de la température est associé un dispositif de choix de la température prédéterminée (13).

10. Séchoir à main selon la revendication 8, caractérisé en ce qu'est prévu comme organe minuteur (11) dépendant de la température un comparateur (11') appréhendant les différences de température.
